# EUROPEAN PATENT APPLICATION

(11) **EP 2 674 322 A1**
(43) Date of publication of application: **18.12.2013**
(21) Application number: 12171452.1
(22) Date of filing: 11.06.2012
(51) Int. Cl.: B60N 2/42, B60N 2/427

(54) **Vehicle seat with a passenger protection function**

(71) Applicant: Volvo Car Corporation, 40 531 Göteborg (SE)
(72) Inventor: Jonsson, Tony, 44191 Alingsås (SE); Björklund, Magnus, 42349 Torslanda (SE)

(57) **Abstract**

The present invention relates to a seat carrier (11) and a back rest portion (14) for a vehicle (1), the back rest portion (14) is pivotally connected to the seat carrier (11) at a pivot axis (A1). The back rest portion (14) is further connected to the seat carrier (11) at a second connection (A2). The second connection (A2) is associated with a deformation element (30), so as to provide for a controlled displacement of the back rest portion (14) during a collision.

## Description

### TECHNICAL FIELD

The present invention relates to a vehicle seat comprising a seat carrier connected to a back rest portion. The back rest portion is adapted to be controllably displaced as a function of a colliding object. The displacement is controlled by means of a deformation element so as to provide a passenger protective function.

### BACKGROUND OF THE INVENTION

Whiplash, or whiplash associated disorder (WAD), is a term describing a range of injuries and symptoms which are common among injured passengers in vehicle accidents. It is common that WAD's occur as a result of an object colliding into the rear of a vehicle, i.e. a rear collision, and under these circumstances, they are also referred to as cervical acceleration-deceleration injuries. During a sudden acceleration of a vehicle, due to e.g. a colliding second vehicle having a velocity as low as about 6-8 km/h, a driver, and the sensitive neck of the driver can be subjected to a force corresponding to a weight 4-5 times the normal weight. The sudden weight increase can force the spine to adopt an unfavorable form which in the end stretches or extends the spine. People having WAD usually not tend to have any visible injuries to the ligaments, discs, muscles or joints which make treatment difficult. It can thus be very difficult and painful for patients having WAD while at the same time WAD imparts high costs to the health care and rehabilitation systems for the society.

One factor which affects the risk of acquiring WAD is how the vehicle seat is positioned, i.e. the position of the seat, back rest and head rest before and during the collision. Different car manufacturers have approached this problem differently; some use an active head restraint, while some use a system commonly referred to as WHIPS, or whiplash protection/prevention system.

In the publication of WO 00/53452 A1, Autoliv AB, a seat carrier is disclosed. The seat carrier comprises a kinetic energy absorber. In case of a rear impact, the seat carrier is adapted to pivot and the kinetic energy absorber is intended to absorb some of the forces imparted to the sear carrier due to a collision. The kinetic energy absorber is arranged on a support structure beneath the seat and is very space consuming and requires a high number of individual components to operate properly.

### SUMMARY

It is an object of the present disclosure to provide an improved passenger protection function for a vehicle seat, or to at least reduce some of the drawbacks, or to at least provide for a useful alternative. The objective is at least partly met by a vehicle seat comprising a seat carrier and a back rest portion for a vehicle. The back rest portion is pivotally connected to the seat carrier the back rest portion is further connected to the seat carrier at a second connection. The second connection is associated with a deformation element, wherein the deformation element is adapted to restrain the back rest portion during a pivotal displacement with respect to the seat carrier, so as to provide for a controlled displacement of the back rest portion during a collision.

The present invention provides a vehicle seat which is adapted to permit a controlled displacement of the back rest portion during a collision by providing a restrained displacement. The deformation element provides for a restrained displacement, and thus reduces the displacement velocity of the back rest portion and absorbs some of the kinetic energy of the back rest portion during the displacement until the back rest portion is effectively stopped from displacement. The present solution is cheap as it requires very few parts and relatively accurate as the deformation element can be adapted to permit displacement at a specified force threshold level by simple physical manipulation of the deformation element, e.g. by varying the dimensions of the deformation element such as the thickness of the deformation element.

The deformation element permits the back rest portion to be displaced a distance, while during that distance, the back rest portion is imparted with a friction which restrains the displacement of the back rest portion so that a controlled displaced is achieved. A controlled displacement, is an intended displacement along a substantially pre-defined path.

According to an aspect, the deformation element is a deformation element adapted to restrain by deformation. The deformation element can be deformed by being compressed, ripped, shredded, folded, grinded, or otherwise deformed from its original form, to provide for the deformation function. The deformation of the deformation elements described above is a permanent deformation, i.e. a plastic deformation. It is possible however with a temporary deformation of the deformation element. Examples of deformation using a temporary deformation are helix springs, or spring steel sheets, or the like, i.e. elements which deform with a substantially non plastic deformation.

According to an aspect, the deformation element comprises a slot, or an indent. The slot or indent can have an elongation, wherein the second connection, or axis, is relatively displaced in the slot or indent. The second connection comprises at least one fastening member, such as a screw or bolt. The fastening member is relatively displaced in the slot or indent to provide for the restrained displacement. By using a slot or indent which the fastening member will travel during the displacement of the back rest portion, the fastening member will deform the slot, or tear the indent to absorb at least some of the kinetic energy of the back rest portion during the displacement.

According to an aspect, the deformation element is arranged on the back rest portion. The deformation element can be arranged on the back rest portion as a separate element e.g. welded to the back rest portion, screwed to the back rest portion or attached in any other manner, or integrated with the back rest portion, i.e. being formed by a part of the back rest portion.

According to an aspect, the deformation element is arranged on the seat carrier. The deformation element can be arranged on the seat carrier as a separate element e.g. welded to the seat carrier, screwed to seat carrier or attached in any other manner, or integrated with the seat carrier, i.e. being formed by a part of the seat carrier.

According to an aspect, the deformation element is arranged on a recliner bracket. The deformation element can be arranged on the recliner bracket as a separate element e.g. welded to the recliner bracket, screwed to the recliner bracket or attached in any other manner, or integrated with the recliner bracket, i.e. being formed by a part of the recliner bracket.

The back rest portion can be pivotally connected to the seat carrier at a pivot axis, and thus pivot about the pivot axis, or being configured to pivot about a pivot axis while being connected elsewhere.

### BRIEF DESCRIPTION OF THE DRAWINGS

Non limiting embodiments of the present invention will be described in greater detail with reference to the accompanying figures in which;
Figure 1 shows in a schematic manner a vehicle and a driver positioned on a vehicle seat according to an embodiment of the present invention;
figure 2a shows a seat carrier and a back rest portion with a view towards the side before a collision;
figure 2b shows the seat carrier and the back rest portion from figure 2a with a view towards the side after the back rest portion has been pivotally displaced after a collision; figure 3a shows parts of a seat carrier and parts of a back rest portion with a view towards the side, and the second connection before a collision in greater detail;
figure 3b shows parts of the seat carrier and parts of the back rest portion and the second connection before a collision from figure 3a in greater detail;
figure 4a shows parts of a second embodiment of a seat carrier and parts of a back rest portion with a view towards the side, and the second connection before a collision in greater detail and;
figure 4b shows parts of the seat carrier and parts of the back rest portion and the second connection from figure 4a before a collision in greater detail.

### DETAILED DESCRIPTION OF PREFERRED EMBODIMENTS

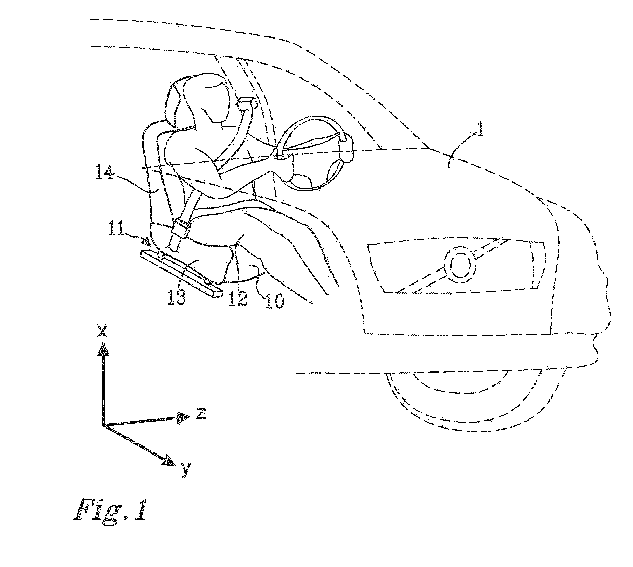

Figure 1 shows, slightly transparent and with dashed lines, a vehicle 1 in the form of a car. A displaceable vehicle seat 10 comprising a seat carrier 11 (only partly shown). A driver 12 is positioned on a seat 13 comprising a cushion, displaceably arranged via the seat carrier 11 between different positions. A back rest portion 14 comprising a back rest cushion is pivotally connected to the seat carrier 11. The position of the vehicle seat 10 can be adjusted in the vehicle height direction along an X-axis and the vehicle longitudinal direction along a Y-axis, as indicated in figure 1 for the purpose of providing a comfortable position for the driver 12. It should be noted that the vehicle seat 10 does not need to be at the drivers position but can be positioned elsewhere. The back rest portion 14 is pivotally connected to the seat carrier 11 and can be tilted relative to the seat carrier 11 to provide a comfortable position.

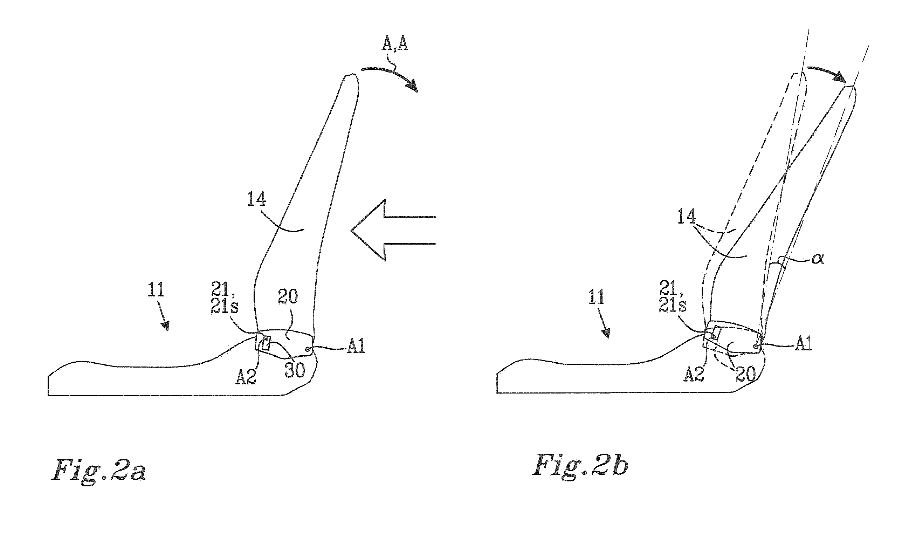

Figure 2a shows the seat carrier 11 and the back rest portion 14. The back rest portion is connected to the seat carrier 11 via a recliner bracket 20 at a first axis A1, also referred to as the pivot axis A1. A recliner bracket is usually used as an intermediate element between a seat carrier and a back rest portion. The pivot axis A1 can be formed by an axle extending substantially along the width of the back rest portion, or a smaller local axle arranged at one side of the back rest portion 14. In case of smaller axles the back rest portion 14 is usually pivotally connected with a first and a second axle arranged at either side of the back rest portion. The first axis A1 can also be slideably arranged along a predetermined path, such as an arc formed path, with respect to the seat carrier 11 to provide for the pivot motion, while in some embodiments, the first axis A1 is stationary positioned with respect to the seat carrier 11.

The back rest portion 14 is further connected to the seat carrier 11 at a second connection A2. The second connection A2 provides for a passenger protection function to the seat carrier 11, as will be described below in greater detail. As is understood, each side of the seat carrier 11 has a first axis A1 and a second connection A2 although only one side is described herein. It is possible however that one side, or two sides, is/are provided with a passenger protective function as described herein.

If an object, such as another vehicle, crashes into the rear of the vehicle 1 as indicated with the arrow in figure 2a, the back rest portion 14 is adapted to be controllably displaced so as to provide for a passenger protection function as indicated with the arrow AA in figure 2a. To enable a controlled displacement, the second connection A2 is associated with a deformation element 30. The deformation element 30 is adapted to cooperate with a fastening member 21 which connects the seat carrier 11 with the back rest portion 14. The fastening member 21 can be in the form of a screw, pin, cylinder, bolt or the like. In the shown embodiment a screw 21 s is used.

Figure 2b shows how the back rest portion 14 has been controllably displaced to an angled position with respect to the seat carrier 11, as is noticed; the back rest portion 14 has pivoted about the first axis A1. The original position of the back rest portion 14 is indicated by dashed lines in figure 2b. The position of the fastening member 21 is unchanged. Figure 2b also indicates an angle α which the back rest portion 14 is adapted to be tilted during the controlled displacement. The angle α can be 2-15 degrees, advantageously 3-8 degrees.

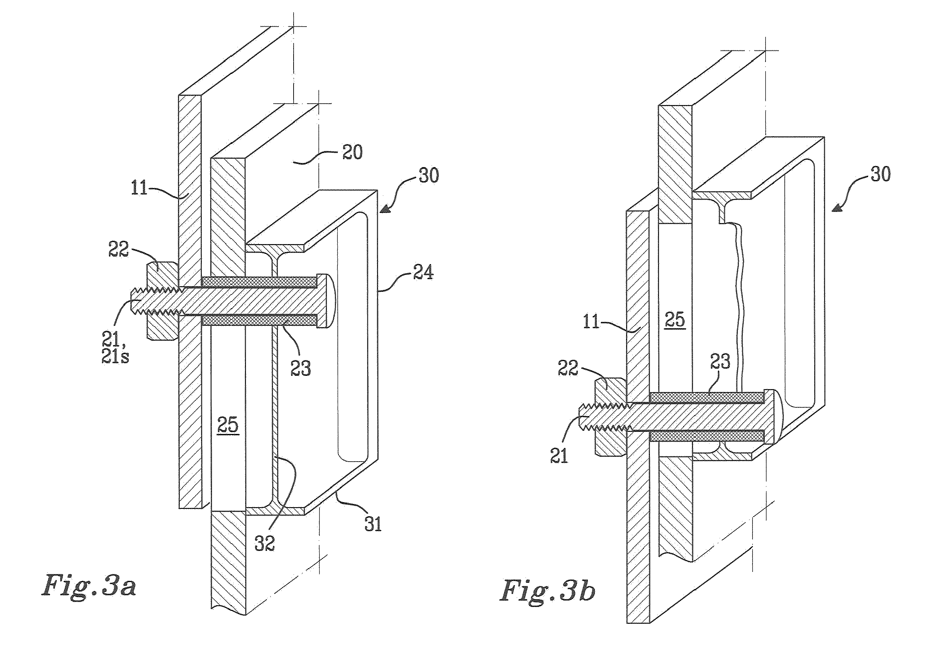

Figure 3a shows an enlarged portion of figure 2a in cross section, namely the second connection A2 in greater detail. Figure 3a shows the seat carrier 11, the recliner bracket 20, the fastening member 21 in the form of a screw 21 s, a nut 22 and a bushing 23. The screw 21 s exerts a pressure on the bushing 23 and presses it against the seat carrier 11.

The recliner bracket 20 is thus not subjected to the frictional forces imparted by the screw and the bushing 23. An aperture 25, or slot, in the recliner bracket 20 permits the relative displacement of the recliner bracket in case of a collision. In case of a rear collision, the deformation element 30 will be deformed, as can be seen in figure 3b. The deformation element 30 is imparting a restraining function using mechanical means.

Figure 3b shows the enlarged portion of figure 3a after the back rest portion 14 has pivoted about the first axis A1. The deformation element 30 has been deformed as the bushing 23 with the screw 21, has ripped a portion of the deformation element 30. As the bushing 23 deforms the deformation element 30, a portion of the kinetic energy which the passengers and the back rest portion 14 has during the collision is partly absorbed, or more accurately, transferred to heat and the plastic deformation of the deformation element 30.

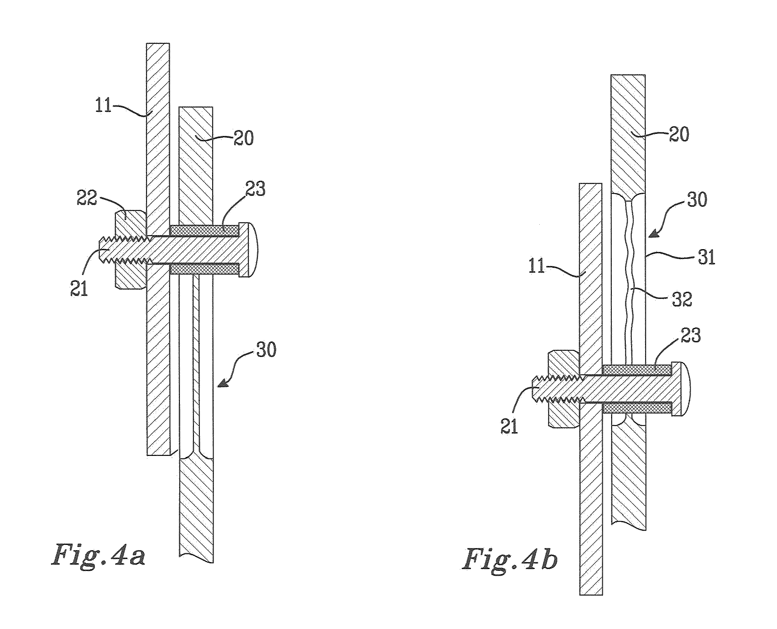

Figures 4a-4b shows an alternative embodiment. Figure 4a shows the second connection A2 before a collision and before the back rest portion has pivoted. Figure 4b shows the second connection A2 after a collision during which the back rest portion 14 has pivoted due to the collision. Figures 4a-4b show the second connection A2 in greater detail.

Figure 4a shows the seat carrier 11, the recliner bracket 20, the deformation element 30, the screw 21, a nut 22 and a bushing 23. In case of a rear collision, the deformation element 30 will be deformed, as can be seen in figure 4b. The deformation element 30 is in this case formed integrally with the recliner bracket 20 by a weak section in the recliner bracket 20. It is of course also possible that the deformation element is integrally formed with the back rest portion 14. The deformation element 30 can be integrally formed with the seat carrier 11 and the fastening member 21 be positioned on the back rest portion 14 or the recliner bracket 20 instead.

In the shown embodiments in figures 3a-4b, the deformation element 30 is in the form of a deformation element 31 adapted to be deformed to restrain the displacement, i.e. effectively reduce the velocity of the displacement but not to prevent the displacement. The deformation element 30 can however eventually stop the displacement of the back rest portion, optionally; the displacement of the back rest portion is stopped by another means such as being physically restricted from further displacement by the recliner bracket 20 and the aperture 25 of the recliner bracket 20. The deformation element 30 comprises an indent 32 which is aligned with the path which the bushing 23 travels during displacement of the back rest portion 14, or more accurately defines the path along which the bushing 23 is permitted to be displaced.

The deformation element 30, or the deformation element, can be made of sheet metal such as aluminum, magnesium, brass, sheet steel, spring steel or similar, optionally or additionally by one or more polymeric materials, carbon reinforced polymeric material, or the like. Choosing a stronger material such as steel can reduce the size or dimensions of the deformation element. The thickness, width and length can thus vary dependent on the desired properties and the material from which it is made from, but the deformation element 30 is suitably selected so that a threshold deformation force is about 3 kN (3 000 N) to about 15 kN, i.e. should the force exceed the threshold level, the deformation element will start to be deformed, the back rest portion will be displaced while the deformation element restrains the displacement. The threshold force level of the deformation element 30 can thus be substantially in the interval of 3-15 kN. The threshold force level of the deformation element 30 can optionally be adapted for other force intervals such as 3-12 kN, 4-10 kN, 6-9 kN for example. By selecting a relatively high threshold force level, the risk for unintended displacement is effectively prevented or at least reduced. However, the deformation element 30 should not be too strong or rigid, as the effect of the displacement of the vehicle seat carrier 11 runs the risk of being reduced or in a worst case scenario completely omitted.

It is possible that the deformation element 30 is configured to impart a differentiated resistance to the bushing 13 and the screw 21 during the deformation of the deformation element 30 as the bushing 23 deforms the deformation element 30. This can be achieved by having a non uniform thickness of the deformation element 30. The deformation element 30 can thus be configured to impart a uniform tear resistance or a non uniform tear resistance. A suitable deformation element 30 is configured to impart a continuously increasing tear resistance, preferably with a linear relationship to the displacement, which will continuously decrease the tilting velocity of the back rest portion until the back rest portion 14 has been tilted to an appropriate angle.

The pivot motion, or the controlled displacement, of the back rest portion 14 is initiated due to the inertia of the back rest portion 14 and the passenger sitting on the vehicle seat 10. The back rest portion 14 will accelerate slower than the vehicle e.g. due to an impact of a second vehicle in the rear as indicated by the arrow in figure 2a, and thus accelerate with a slightly slower speed than the remaining vehicle 1 due to the inertia of the passenger and the back rest portion 14. The back rest portion 14 is thus forced to tilt about the first axis A1 if the threshold force level of the deformation element 30 is exceeded. The relative displacement of the back rest portion 14 with respect to the vehicle seat carrier 11 and to the vehicle 1 will reduce the risk for injuries during a crash, and especially whiplash injuries in case of a rear collision.

## Claims

1. A vehicle seat (10) comprising a seat carrier (11) and a back rest portion (14), said back rest portion (14) being pivotally connected to said seat carrier (11), said back rest portion (14) further being connected to said seat carrier (11) at a second connection (A2),
**characterized in that**
said second connection (A2) is associated with a deformation element (30), wherein said deformation element (30) is adapted to restrain said back rest portion (14) during a pivotal displacement with respect to said seat carrier (11), so as to provide for a controlled displacement of said back rest portion (14) during a collision.

2. The vehicle seat (10) according to claim 1, wherein said deformation element (31) comprises a slot, or an indent (32), said slot or indent (32) having an elongation, wherein said second connection (A2) comprises at least one fastening member, such as a screw or bolt, and in that said fastening member is relatively displaced in said slot or indent (32).

3. The vehicle seat (10) according to any of the preceding claims, wherein said deformation element (30) is arranged on said back rest portion (14).

4. The vehicle seat (10) according to any of the claims 1-3, wherein said deformation element (30) is arranged on said seat carrier (11).

5. The vehicle seat (10) according to any of the claims 1-3, wherein said deformation element (30) is arranged on a recliner bracket (20).

6. The vehicle seat (10) according to claim 5, wherein said deformation element 30 is integrally formed with said seat carrier (11), back rest portion (20), or a recliner bracket (20) connected to said seat carrier (11) and said back rest portion (14).

7. The vehicle seat (10) according to any of the preceding claims, wherein back rest portion (14) is connected to said seat carrier (11) at two individual second connections (A2), each comprising a deformation element (30).

8. The vehicle seat (10) according to any of the preceding claims, wherein said back rest portion (14) is pivotally connected to said seat carrier (11) at a pivot axis (A1).
